# EUROPÄISCHE PATENTSCHRIFT

(11) **EP 0 740 149 B1**
(45) Veröffentlichungstag und Bekanntmachung des Hinweises auf die Patenterteilung: **02.01.2003**
(21) Anmeldenummer: 96104939.2
(22) Anmeldetag: 28.03.1996
(51) Int. Cl.: G01N 27/403

(54) **Elektrochemische Messzelle**
Electrochemical sensor
Capteur électrochimique

(30) Priorität: 26.04.1995 DE 19515392
(43) Veröffentlichungstag der Anmeldung: 30.10.1996
(73) Patentinhaber: ProMinent Dosiertechnik GmbH, 69123 Heidelberg (DE)
(72) Erfinder: Pinkowski, Alexander, Dr., 69436 Schönbrunn (DE); Chierchié, Tiziana, Dr., 64757 Rothenberg (DE)
(74) Vertreter: Knoblauch, Andreas, Dr.-Ing.

(56) Entgegenhaltungen:
- EP-A- 0 050 035
- EP-A- 0 289 199
- WO-A-85/02465

## Beschreibung

Die Erfindung betrifft eine elektrochemische Meßzelle mit einem Elektrolytraum, der zumindest teilweise von einer hydrophilen Membran begrenzt und mit einem Elektrolyten gefüllt ist, und einer Elektrodenanordnung, die in den Elektrolyten eintaucht.

US-A-3 498 899 zeigt eine elektrochemische Elektrodenanordnung, mit der Ionenpotential-Messungen von Lösungen vorgenommen werden können. Dabei wird eine hydrophile Membran zur Begrenzung eines Elektrolytraumes verwendet, wobei die Membran sicherstellen soll, daß eine Flüssigkeitsverbindung zwischen der zu messenden Lösung und der Elektrode nicht durch einen Flüssigkeitsstrom, sondern durch Diffusion erfolgt. Dabei bildet sich die Flüssigkeitsverbindung zwischen dem Elektrolyten, d.h. der Salzlösung an der Elektrode und der zu messenden Flüssigkeit in der Membrane.

Die Elektrodenanordnung kann sowohl mit zwei Elektroden als auch mit drei Elektroden ausgebildet sein. Bei der Zwei-Elektroden-Variante hat man eine sogenannte Arbeitselektrode und eine sogenannte Gegenelektrode. Es fließt bei amperometrischem Betrieb während der Messung ein Strom, der der Konzentration des zu bestimmenden Stoffes im Meßmedium proportional ist. Die Bestimmung des unbekannten Stoffes erfolgt mehr oder weniger selektiv im allgemeinen bei einem zwischen diesen beiden Elektroden von außen angelegten Potential.

In speziellen Fällen kann die zwischen den beiden Elektroden vorhandene natürliche elektromotorische Kraft, die sich aus der Stellung der verwendeten Elektrodenmaterialien in der sogenannten elektrochemischen Spannungsreihe ergibt, als Meßspannung verwendet werden.

Bei der Drei-Elektroden-Variante gilt für die Meß- oder Arbeitsspannung bzw. für den Meßstrom genau das gleiche wie bei der Zwei-Elektroden-Variante. Der Unterschied zur Zwei-Elektroden-Variante besteht lediglich darin, daß zusätzlich zur Arbeits- und Gegenelektrode noch eine sogenannte Referenzelektrode verwendet wird. Das Arbeitspotential wird zwischen Arbeits- und Referenzelektrode angelegt, wozu im allgemeinen eine sogenannte potentiostatische Schaltung verwendet wird, und der Meßstrom wird zwischen Arbeits- und Gegenelektrode gemessen.

Voraussetzung ist in beiden Fällen, daß die zu messende Substanz auf irgendeine Art und Weise an die Arbeitselektrode gelangt, um bei einer Reaktion im Elektrolytraum den gewünschten Meßstrom zu erzeugen. Um diesen Weg zu ermöglichen, ist die Membran vorgesehen, die idealerweise für die zu messende Substanz durchlässig und für den Elektrolyten undurchlässig ist. Wenn die Meßzelle zur Messung in einer Flüssigkeit eingesetzt wird, werden oft hydrophobe Membranen verwendet, um zum einen das Austreten des Elektrolyten zu verhindern und zum anderen das Eindringen der Meßflüssigkeit zu vermeiden.

Allerdings sind die Meßmöglichkeiten mit hydrophoben Membranen begrenzt. Im allgemeinen ist es lediglich für Gase möglich, durch die Membran hindurchzutreten und in den Elektrolytraum zu gelangen. Für Flüssigkeiten ist dieser Weg aufgrund der Hydrophobie der Membran versperrt.

WO-A-85 02 465 beschreibt eine Meßzelle zum elektrochemischen Messen von Kohlenmonoxid. Die Meßzelle weist eine Elektrodenanordnung mit einer Meßelektrode, einer Referenzelektrode und einer Gegenelektrode auf, die mit einem Elektrolyten in Verbindung stehen. Der Elektrolyt ist als gelierte Elektrolytlösung ausgebildet, die nicht durch eine semiphermeable Membran fließen kann.

Der Erfindung liegt die Aufgabe zugrunde, eine Meßzelle anzugeben, mit der auch die Konzentration von in Wasser gelösten gasförmigen sowie geladenen oder neutralen Spezies, die elektrochemisch nachgewiesen werden können, bestimmt werden kann.

Diese Aufgabe wird bei einer elektrochemischen Meßzelle der eingangs genannten Art wird durch den kennzeichnenden Teil des Anspruchs 1 gelöst.

Durch die hydrophile Membran können nun auch Flüssigkeiten in den Elektrolytraum gelangen, so daß auch in Wasser gelöste gasförmige Spezies nachgewiesen werden können. Das gleiche gilt für geladene oder neutrale Spezies, die im Wasser oder einer anderen Flüssigkeit nachgewiesen werden sollen. Die Hydrophilie der Membran wäre an und für sich ein Hindernisgrund für den dargestellten Aufbau, weil die Membran dann keine Barriere dagegen bildet, daß der Elektrolyt, der auch als innerer Elektrolyt bezeichnet wird, austritt und damit unwirksam wird. Durch eine relativ einfach erscheinende Maßnahme, nämlich die Erhöhung der Viskosität des Elektrolyten, läßt sich dieser Effekt aber vermeiden oder zumindest so weit verringern, daß die Funktionsfähigkeit der Meßzelle auch über eine längere Lebensdauer hinweg erhalten wird. Bei der Verwendung einer hydrophoben Membran reichern sich über die Zeit die Reaktionsprodukte im Elektrolytraum an, da sie durch die hydrophobe Membran nicht wieder nach außen gelangen können. Bei der Verwendung einer hydrophilen Membran in Verbindung mit dem hochviskosen Elektrolyten läßt sich eine gewisse Anreicherung zwar auch nicht vermeiden. Die Reaktionsprodukte können aber durchaus auch wieder durch die Membran nach außen gelangen. Auch dadurch wird die Lebensdauer der Meßzelle vergrößert. Als Material für die Membran kann man beispielsweise einen Polycarbonat- oder Polyesterfilm verwenden, bei dem die Poren durch Ionen erzeugt werden, die mit hoher Energie durch den Film hindurchgeschossen werden, wobei die dadurch entstandenen Kanäle durch hochpräzises chemisches Ätzen die gewünschte Porengröße erhalten. Derartige Membranen werden beispielsweise unter den Namen Cyclopore von der Firma Cyclopore in Belgien oder unter dem Namen Nuclepore von der Firma Nuclepore, USA, vertrieben. Die Bezeichnung "hochviskos" ist relativ. Die optimale Viskosität ist von der einzelnen Meßzelle, insbesondere der Porengröße und Dicke der Membran abhängig. Bei einer dünneren Membran wird die Viskosität höher eingestellt als bei einer dickeren. Bei einer kleineren Porengröße kann man eine niedrigere Viskosität verwenden als bei einer großen Porengröße. Das Maß für die Viskosität bzw. der Beurteilungsfaktor, welche Viskosität die richtige ist, richtet sich nach der Leckrate. Diese kann durch die Erhöhung der Viskosität entsprechend klein gehalten werden. In dem Zeitraum von 1 bis 6 Monaten dringt nicht mehr als die Hälfte des Volumens des Elektrolytraums durch die Membran nach außen. Dieser Zeitraum ergibt sich aus bevorzugten Anwendungsbereichen der Meßzelle. Eine mögliche Anwendung ist z. B. eine Chlormessung in Schwimmbädern. Dort beträgt die Freiluftsaison ca. sechs Monate, und der Bademeister bzw. der Verantwortliche für die Technik im Schwimmbad bereitet erfahrungsgemäß die Meßtechnik vor Beginn der Saison neu vor. Entsprechendes gilt für Hallenbäder. Wenn also die Meßzelle mit dem Elektrolyten innerhalb dieser sechs-Monate zufriedenstellend arbeitet, weil der Elektrolytverlust in Grenzen gehalten wird, reicht dies aus. Gegebenenfalls kann man eine Zwischenwartung nach etwa drei Monaten in Kauf nehmen. Eine andere Anwendung ist beispielsweise eine Meßzelle im Klärwerksbereich. Dort sind die Wartungsintervalle kürzer, so daß durchaus einmal im Monat eine Wartung, d.h. ein Wechsel oder ein Nachfüllen des Elektrolyten vorgenommen werden kann. Der Wechsel bzw. die Erneuerung des Elektrolyten werden notwendig einmal wegen des zwar geringen, aber doch endlichen Ausflusses des Elektrolyten, zum anderen aber auch wegen des Eindringens von Meßflüssigkeit in den Elektrolytraum, was zu einer Veränderung (Verdünnung oder Verschmutzung) des Elektrolyten führt. Der Zeitraum ist also unter anderem auch von der Umgebung abhängig, in der die Meßzelle arbeitet, z.B. vom Verschmutzungsgrad, dem Durchmesser der Schmutzpartikel etc.

In einer besonders bevorzugten Ausgestaltung ist vorgesehen, daß der Elektrolyt nicht fest ist. Er bleibt also fließfähig, was den großen Vorteil hat, daß er nachfüllbar ist. Dadurch läßt sich die Funktionsfähigkeit der Meßzelle praktisch beliebig verlängern, soweit es den Elektrolyten betrifft. Andere Faktoren können natürlich die Lebensdauer begrenzen. Auch der Austausch des Elektrolyten wird vereinfacht. Solange der Elektrolyt nicht fest, sondern fließfähig ist, kann man ihn durch ein einfaches Ausgießen aus dem Elektrolytraum entfernen. Dies ist besonders dann von Vorteil, wenn die Meßzelle in einer Umgebung mit hohem Verschmutzungsgrad eingesetzt wird. Aufgrund der hohen Viskosität des Elektrolyten wird das Ausgießen zwar länger dauern als bei Elektrolyten, deren Viskosität in der Größenordnung der Viskosität von Wasser liegt, wie das bislang vielfach der Fall war. Ein Auswechseln ist aber immer noch möglich, ohne daß die Elektrodenanordnung aufgrund eines mechanischen Eingriffs in einen festen Elektrolyten der Gefahr einer Beschädigung ausgesetzt ist.

Bevorzugterweise enthält der Elektrolyt ein Geliermittel. Mit Hilfe eines derartigen Geliermittels wird aus einem zuvor niedrigviskosen Elektrolyten praktisch ohne Veränderungen der elektrolytischen Eigenschaften ein gelartiger Elektrolyt mit einer entsprechend höheren Viskosität. Dieses Elektrolyt-Gel läßt sich vielfach noch in flüssiger Form, also mit niedriger Viskosität, in den Elektrolytraum einfüllen und verfestigt sich dann erst im Elektrolytraum. Dies erleichtert die Beschickung ganz erheblich. Ein derartiges Gel wird aber auch nicht so fest werden, daß es gar nicht oder nur mit Mühe aus dem Elektrolytraum entfernt werden kann.

Hierbei ist das Geliermittel bevorzugterweise aus der Gruppe der Hydroxyethylcellulosen gewählt. Die wässrigen Lösungen der Hydroxyethylcellulosen zeichnen sich auch bei Elektrolytzusatz durch ihr völlig inertes elektrochemisches Verhalten aus, so daß die erwünschte Elektrodenreaktion nicht gestört wird.

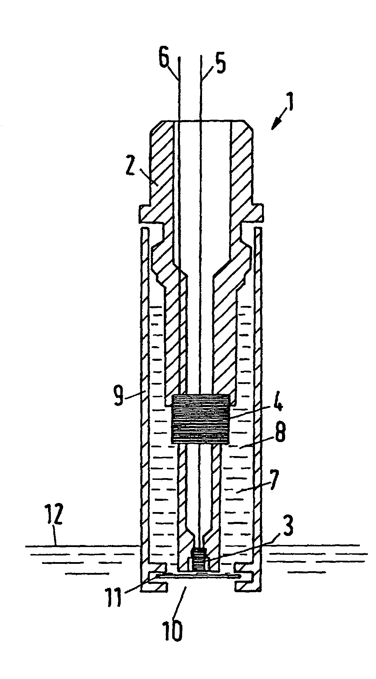

Die Erfindung wird im folgenden anhand eines Ausführungsbeispiels in Verbindung mit der Zeichnung beschrieben. Hierin zeigt die
- einzige Figur:: einen schematischen Querschnitt durch eine elektrochemische Meßzelle.

Eine elektrochemische Meßzelle 1 weist einen Elektrodenhalter 2 auf, in dem eine Arbeitselektrode 3 und eine Gegen- und Bezugselektrode 4 angeordnet sind, deren Anschlüsse 5, 6 nach außen geführt sind. Anstelle der Gegen- und Bezugselektrode 4, die hier einstückig ausgebildet ist, können Gegenelektrode und Bezugselektrode auch voneinander getrennt sein. Dann handelt es sich nicht um eine Zwei-Elektroden-Anordnung, wie dargestellt, sondern um eine Drei-Elektroden-Anordnung, bei der dann entsprechend drei Anschlüsse nach außen geführt werden.

Die Elektroden 3, 4 stehen mit einem Elektrolytraum 7 in Verbindung, der mit einem Elektrolyten 8 gefüllt ist.

Der Elektrolytraum 7 ist von einer Membrankappe 9 umgeben, die eine Öffnung 10 aufweist, die von einer Membran 11 verschlossen ist. Mit der Öffnung 10 ist die Meßzelle 1 in einer Flüssigkeit 12, beispielsweise Wasser, eingetaucht.

Die Membran 11 ist elektrophil. Sie läßt also auch Flüssigkeiten durchtreten, beispielsweise das Wasser 12, so daß eine darin enthaltene Spezies oder Substanz mit dem Elektrolyten 8 reagieren kann, wobei ein der Reaktion entsprechender Strom zwischen den beiden Anschlüssen 5, 6 gemessen werden kann. Als Membran 11 kann man z.B. solche verwenden, die den Cyclopore-Membranen analog sind.

Der Elektrolyt 8 ist hochviskos, wobei die "Höhe" der Viskosität abhängt von der Dicke und Porengröße der Membran. Je dicker die Membran und je kleiner ihre Porengröße ist, desto niedriger kann die Viskosität des Elektrolyten 8 gewählt werden. Allerdings ist der Elektrolyt 8 nicht fest, so daß er nach dem Abziehen oder Abschrauben der Membrankappe 9 vom Elektrodenhalter 2 ausgeleert und ersetzt werden kann. Gegebenenfalls reicht es auch aus, ihn nach dem Entfernen der Membrankappe vom Elektrodenhalter 2 nachzufüllen.

Um die höhere Viskosität zu erzeugen, wird dem Elektrolyten 8 ein Geliermittel zugegeben, das aus der Gruppe der Hydroxyethylcellulosen gewählt wird. Wenn das Geliermittel erst kurz vor dem Einfüllen des Elektrolyten 8 in den Elektrolytraum 7 dem Elektrolyten 8 zugegeben wird, ist der Elektrolyt 8 beim Einfüllen noch relativ dünnflüssig. Er geliert dann aus und bildet ein hochviskoses, aber immer noch fließfähiges Gel. Beim Einfüllen müssen dann Maßnahmen getroffen werden, um das vorzeitige Ausfließen des Elektrolyten 8 durch die Membran 11 zu verhindern.

Auch nach dem Gelieren wird man nicht verhindern können, daß eine gewisse Leckrate vorhanden, ist. d.h. es wird auch im Betrieb der Meßzelle 1 ein gewisser Teil des Elektrolyten durch die Membran 11 nach außen oder in das Wasser 12 übertreten. Diese Leckrate ist aber aufgrund der hohen Viskosität des Elektrolyten 8 so klein, daß in einem längeren Zeitraum im Bereich von einem bis sechs Monaten höchstens ein Volumen austreten kann, das der Hälfte des Volumens des Elektrolytraums 7 entspricht. Die Leckrate liegt hierbei im Bereich von µl pro Tag.

Die Herstellung des Elektrolyten 8 erfolgt nach folgendem Beispiel:

Es werden 10-60 g Hydroxyethylcellulose (Merck 822068) in 1 l Grundelektrolyten gelöst. Der Grundelektrolyt kann bestehen
a) aus 0,01 bis 3,5 molarer Kaliumchloridlösung bei Verwendung eine Silber-/Silberchlorid-Bezugselektrode oder
b) aus 0,1 bis 1 molarer Kaliumiodidlösung bei Verwendung einer Silber-/Silberiodid-Bezugselektrode.

Die Grundelektrolytlösungen der angegebenen Molarität (Konzentration) werden durch Lösen der angegebenen Mengen der betreffenden Salze in voll entsalztem Wasser (VE-Wasser) hergestellt.

Als Ausgangsprodukte werden verwendet:
- Kaliumchlorid zur Analyse (Merck 4936) bzw.
- Kaliumiodid zur Analyse (Merk 5043)

Von der dargestellten Ausführungsform kann in vielerlei Hinsicht abgewichen werden. Anstelle der Zwei-Elektroden-Meßzelle kann auch eine Drei- oder Mehr-Elektroden-Meßzelle verwendet werden. Die Öffnung 10 kann an anderer Stelle in der Membrankappe 9 angeordnet werden. Der Elektrolytraum 7 kann größer gewählt werden. Die Meßzelle 1 kann weiter in das Wasser 12 eingetaucht werden.

## Patentansprüche

1. Elektrochemische Meßzelle (1) mit einem Elektrolytraum (7), der zumindest teilweise von einer hydrophilen Membran (11) begrenzt und mit einem Elektrolyten (8) gefüllt ist, und einer Elektrodenanordnung (3, 4), die in den Elektrolyten (8) eintaucht, **dadurch gekennzeichnet, daß** die Membrane (11) für den Elektrolyten (8) und Meßflüssigkeit durchlässig ist und der Elektrolyt (8) hochviskos, aber noch fließfähig ist, wobei die Viskosität des Elektrolyten (8) so in Abhängigkeit von der Porengröße und Dicke der Membran (11) eingestellt ist, daß seine Leckrate nicht größer als die Hälfte des Volumens des Elektrolytraums (7) durch einen Zeitraum im Bereich von einem bis sechs Monate ist.

2. Meßzelle nach Anspruch 1, **dadurch gekennzeichnet, daß** der Elektrolyt (8) ein Geliermittel enthält.

3. Meßzelle nach Anspruch 2, **dadurch gekennzeichnet, daß** das Geliermittel aus der Gruppe der Hydroxyethylcellulosen gewählt ist.

## Claims

1. Electrochemical measuring cell (1) having an electrolyte space (7), which is at least partially delimited by a hydrophilic membrane (11) and is filled with an electrolyte (8), and an electrode arrangement (3, 4), which is immersed in the electrolyte (8), **characterized in that** the membrane (11) is permeable to the electrolyte (8) and measuring liquid, and the electrolyte (8) is highly viscous but still able to flow, the viscosity of the electrolyte (8) being set as a function of the pore size and thickness of the membrane (11) in such a way that its leakage rate is no greater than half the volume of the electrolyte space (7) over a period in the range from one to six months.

2. Measuring cell according to Claim 1, **characterized in that** the electrolyte (8) contains a gelling agent.

3. Measuring cell according to Claim 2, **characterized in that** the gelling agent is selected from the group of the hydroxyethylcelluloses.

## Revendications

1. Cellule de mesure électrochimique (1) disposant d'une chambre électrolytique (7) délimitées au moins partiellement par une membrane hydrophile (11) et remplie d'un électrolyte (8), et disposant d'électrodes (3, 4) plongées dans l'électrolyte (8), **caractérisée en ce que** la membrane (11) est perméable aux électrolytes (8) et au fluide de mesure, et que l'électrolyte (8) est hautement visqueux mais encore liquide, la viscosité de l'électrolyte (8) étant déterminée en relation avec le diamètre des pores et l'épaisseur de la membrane (11), de sorte que le taux de fuite de l'électrolyte n'excède pas la moitié du volume de la chambre électrolytique (7) pour une période allant de un à six mois.

2. Cellule de mesure selon la revendication 1, **caractérisée en ce que** l'électrolyte (8) contient un gélifiant.

3. Cellule de mesure selon la revendication 2, **caractérisée en ce que** le gélifiant fait partie du groupe des hydroxyéthylcelluloses.
